# EUROPÄISCHE PATENTANMELDUNG

(11) **EP 0 798 156 A2**
(43) Veröffentlichungstag der Anmeldung: **01.10.1997**
(21) Anmeldenummer: 97105283.2
(22) Anmeldetag: 27.03.1997
(51) Int. Cl.: B60N 2/36

(54) **Halterung für einen Fahrzeugsitz**

(30) Priorität: 27.03.1996 DE 19612200
(71) Anmelder: LEAR Corporation GmbH & Co. KG, 65462 Ginsheim-Gustavsburg (DE)
(72) Erfinder: Mack, John, 85652 Landsham (DE); Neumann, Andreas, 85652 Landsham (DE)
(74) Vertreter: Sajda, Wolf E., Dipl.-Phys.

(57) **Zusammenfassung**

Es wird eine Halterung für einen Fahrzeugsitz, insbesondere einen Fahrzeug-Rücksitz angegeben, welche erste Befestigungsteile (30a, 60a), die an der Unterseite des Sitzes (10) angebracht sind, und zweite Befestigungsteile (30b, 60b) aufweist, die am Fahrzeugkörper (20) anzubringen sind, um den Sitz (10) am Fahrzeugkörper (20) zu befestigen. Dabei bilden die ersten Befestigungsteile (30a, 60a) und die zweiten Befestigungsteile (30b, 60b) mindestens eine erste lösbare Drehgelenkverbindung (30) sowie eine in Längsrichtung des Sitzes (10) davon beabstandete, zweite lösbare Drehgelenkverbindung (60). Die zweite lösbare Drehgelenkverbindung (60) ist dabei arretierbar ausgebildet.

## Beschreibung

Die Erfindung betrifft eine Halterung für einen Fahrzeugsitz, insbesondere einen Fahrzeug-Rücksitz, bei der erste Befestigungsteile, die an der Unterseite des Sitzes angebracht sind, mit zweiten Befestigungsteilen am Fahrzeugkörper in Eingriff bringbar sind, um den Sitz am Fahrzeugkörper zu befestigen.

Fahrzeugsitze mit derartigen Halterungen sind in den verschiedensten Bauformen bekannt. In den meisten Fällen sind die Fahrzeug-Rücksitze dabei fest am Fahrzeugkörper montiert, beispielsweise mit Laschen und Schraubbolzen, die am Fahrzeugkörper befestigt werden. Derartige Fahrzeug-Rücksitze sind im allgemeinen nicht zum Herausnehmen durch den Benutzer des Fahrzeugs gedacht, 50 daß das Ausbauen eines solchen Fahrzeug-Rücksitzes für den Benutzer in der Regel sehr mühsam ist.

Ein aus dem Fahrzeug herausnehmbarer Fahrzeug-Rücksitz ist von dem VW-Käfer bekannt, wobei dort die Fahrzeugbatterie unter der Rücksitzbank untergebracht ist. Um Zugang zu der Fahrzeugbatterie zu erhalten, ist die gesamte Rücksitzbank lösbar ausgebildet und mit Klemmteilen versehen, um die Rücksitzbank am Fahrzeugkörper festzuklemmen bzw. einrasten zu lassen.

Bei modernen Personenkraftwagen besteht der Wunsch, im Bedarfsfalle die hintere Ladefläche eines Fahrzeugs zu vergrößern, wenn beispielsweise sperrige Gegenstände im Fahrzeug transportiert werden sollen. In vielen Fällen sind zwar die Rücklehnen der hinteren Sitze nach vorn klappbar ausgebildet, jedoch ergibt sich dabei in den meisten Fällen eine schräge Auflagefläche durch die Rückseite der umgeklappten Rückenlehnen, wenn diese auf den jeweiligen Rücksitz nach vorn geklappt sind.

Der Erfindung liegt daher die Aufgabe zugrunde, eine Halterung für einen Fahrzeugsitz, insbesondere einen Fahrzeug-Rücksitz anzugeben, die es ermöglicht, den Sitz in einfacher Weise zu lösen und aus dem Fahrzeug zu entfernen sowie den Sitz auch wieder leicht einzubauen.

Die erfindungsgemäße Lösung besteht darin, eine Halterung für einen Fahrzeugsitz der eingangs genannten Art so auszubilden, daß die ersten Befestigungsteile und die zweiten Befestigungsteile mindestens eine erste lösbare Drehgelenkverbindung und eine in Längsrichtung des Sitzes davon beabstandete, zweite lösbare Drehgelenkverbindung bilden und daß die zweite löasbare Drehgelenkverbindung arretierbar ist.

Mit der erfindungsgemäßen Halterung wird die Aufgabe in zufriedenstellender Weise gelöst. Wenn die zweite lösbare Drehgelenkverbindung arretiert ist, dann ist der Sitz in üblicher Weise im Fahrzeug befestigt. Wenn jedoch die zweite lösbare Drehgelenkverbindung entriegelt ist, läßt sich der Sitz aus dem Fahrzeug herausnehmen.

In Weiterbildung der erfindungsgemäßen Halterung ist vorgesehen, daß ein Paar von ersten und/oder zweiten Drehgelenkverbindungen vorgesehen ist, wobei die Drehgelenkverbindungen, auf die Längsrichtung des Sitzes bezogen, symmetrisch zueinander angeordnet sind. Auf diese Weise wird eine besonders stabile Konstruktion der Halterung erreicht. Weiterhin kann dann eine Vielzahl von Bauteilen identisch ausgebildet sein.

Bei einer speziellen Ausführungsform der erfindungsgemäßen Halterung ist vorgesehen, daß die erste Drehgelenkverbindung eine gabelförmige oder muldenförmige Aufnahme aufweist, die ein Achsenteil drehbar aufnimmt, wobei jeweils die eine Komponente von Aufnahme und Achsenteil an dem Sitz und die andere an dem Fahrzeugkörper anbringbar ist. In Abhängigkeit von sonstigen konstruktiven Erfordernissen besteht somit die Möglichkeit der Auswahl, welche Komponente am Sitz bzw. am Fahrzeugkörper montiert wird.

Bei einer speziellen Ausführungsform der erfindungsgemäßen Halterung ist vorgesehen, daß die erste Drehgelenkverbindung eine Aufnahmelasche aufweist, die um eine im wesentlichen horizontale Achse drehbar am Fahrzeugkörper angelenkt ist und die an ihrem freien Ende die gabelförmige oder muldenförmige Aufnahme bildet. Bei einer derartigen Konstruktion kann das Achsenteil in einfacher Weise von oben in die jeweilige Aufnahme eingesetzt werden.

In Weiterbildung dieser Halterung ist vorgesehen, daß die Aufnahmelasche als bogenförmiger oder winkelförmiger Hebel ausgebildet und mit einem Bolzen drehbar an einem Lagerbock an dem Fahrzeugkörper befestigbar ist. Auf diese Weise benötigt die Aufnahmelasche wenig Raum, da sie im eingebauten Zustand des Sitzes unter den Sitz geklappt werden kann.

Besonders vorteilhaft ist es, wenn bei der erfindungsgemäßen Halterung die Aufnahmelasche mit einer Feder in eine im wesentlichen senkrechte Ruhestellung vorgespannt ist, in der die Aufnahme nach oben weist. Die Aufnahmelasche nimmt dann automatisch in der Ruhestellung eine Position ein, die das Einsetzen des Achsenteiles erleichtert.

Bei einer speziellen Ausführungsform der erfindungsgemäßen Halterung ist vorgesehen, daß die Feder eine gewickelte Schenkelfeder ist, die mit dem einen Schenkel an der Aufnahmelasche und mit dem anderen Schenkel an dem Lagerbock angreift. Die Feder kann beispielsweise an der Drehachse der Aufnahmelasche angebracht sein und die Aufnahmelasche in die gewünschte Stellung vorspannen.

In Weiterbildung der erfindungsgemäßen Halterung ist vorgesehen, daß die Drehbewegung der Aufnahmelasche durch einen Anschlag begrenzt ist, derart, daß die Aufnahmelasche in der Anschlagstellung, also der Ruhestellung, im wesentlichen senkrecht steht. Auch diese Maßnahme trägt dazu bei, die Aufnahmelasche in eine zum Einbauen des Sitzes günstige Stellung zu bringen.

In Weiterbildung der erfindungsgemäßen Halterung ist vorgesehen, daß die Aufnahmelasche an ihrem oberen Ende eine Verlängerung aufweist, die in der Ruhestellung der Aufnahmelasche neben der Aufnahme nach oben vorsteht und einen Rasthaken zur Arretierung einer Fahrzeugkomponente bildet. Eine derartige spezielle Form der Aufnahmelasche kann dazu dienen, beispielsweise eine nach vorn geklappte Rückenlehne in dieser Klappstellung zu arretieren, wobei diese Komponente dann an dem Rasthaken einrasten kann.

In Weiterbildung der erfindungsgemäßen Halterung ist vorgesehen, daß das Achsenteil als Einhängebügel ausgebildet ist, der U-förmig ausgebildet ist und zwischen den beiden Schenkeln des U einen Bolzen als Drehachse zum Eingriff mit der Aufnahme aufweist. Derartige Einhängebügel sind in einfacher Weise herstellbar, wobei die beiden Schenkel des Einhängebügels die Aufnahmelasche zwischeneinander aufnehmen und führen.

Bei einer speziellen Ausführungsform der erfindungsgemäßen Halterung ist vorgesehen, daß die zweite Drehgelenkverbindung zwei Laschen mit komplementären Bohrungen aufweist, die durch einen arretierbaren Bolzen als Drehachse lösbar miteinander verbunden sind. Der Bolzen kann dabei beispielsweise mit einem Splint gesichert sein.

Bei einer anderen speziellen Ausführungsform der erfindungsgemäßen Halterung ist vorgesehen, daß die zweite Drehgelenkverbindung einen Lagerbolzen und eine arretierbare Klinke zum Eingriff mit dem Lagerbolzen aufweist, wobei jeweils die eine Komponente von Lagerbolzen und Klinke an dem Sitz und die andere Komponente an dem Fahrzeugkörper anbringbar sind. Die Auswahl kann hierbei in Abhängigkeit von den baulichen Gegebenheiten im Fahrzeug getroffen werden.

Die Anbringung der Klinke am Sitz ist allerdings bevorzugt, weil man dann mit der Hand, die die Klinke entriegelt, den Sitz selbst herausnehmen kann. Dies erleichtert die Handhabung beträchtlich.

In Weiterbildung der erfindungsgemäßen Halterung ist vorgesehen, daß die Klinke mit einem Bolzen an einem Lagerblech drehbar gelagert und zwischen einer Offenstellung und einer Arretierstellung schwenkbar ist. Auf diese Weise ist das Entriegeln und Arretieren der Klinke in sehr einfacher Weise möglich.

Besonders vorteilhaft ist es, wenn bei der erfindungsgemäßen Halterung die Klinke drehbar gelagert und mit einer Feder in ihre Arretierstellung vorgespannt ist. Ein Betätigen der Klinke ist dann nur zum Entriegeln und Herausnehmen des Sitzes erforderlich.

In Weiterbildung der erfindungsgemäßen Halterung ist vorgesehen, daß das Lagerblech eine U-förmige Öffnung an seiner Stirnseite zur Aufnahme des Lagerbolzens sowie Anschläge aufweist, die die Drehbewegung der Klinke an dem Lagerblech in die Offenstellung bzw. in die Arretierstellung begrenzen. Das Lagerblech hat somit eine Doppelfunktion und dient einerseits zur Lagerung der Klinke und andererseits zur Aufnahme des Lagerbolzens.

Besonders vorteilhaft ist es, wenn bei der erfindungsgemäßen Halterung die Feder eine gewickelte Schenkelfeder ist, die mit dem einen Schenkel an der Klinke und mit dem anderen Schenkel an dem Lagerblech angreift. Insbesondere kann eine solche gewickelte Schenkelfeder an dem Bolzen angebracht sein, mit dem die Klinke drehbar gelagert ist.

In Weiterbildung der erfindungsgemäßen Halterung ist vorgesehen, daß die Klinke an ihrem dem Lagerbolzen zugewendeten Ende einen Arretierhaken aufweist, der an seiner Vorderseite eine Rampe als Gleitfläche für den Lagerbolzen aufweist, wobei die Rampe über einen Vorsprung in eine Aussparung an der Rückseite übergeht, welche einen Widerhaken für den Lagerbolzen bildet. Auf diese Weise kann beim Montieren des Sitzes die drehbare Klinke dem Lagerbolzen leicht ausweichen, der über die Rampe rutscht. Hat der Lagerbolzen den Vorsprung überwunden, dreht sich die Klinke automatisch in ihre Arretierstellung zurück und hält den Lagerbolzen mit ihrem Widerhaken fest.

In Weiterbildung der erfindungsgemäßen Halterung ist vorgesehen, daß die Aussparung in der Klinke und die U-förmige Öffnung im Lagerblech miteinander ausgefluchtet sind und zwischeneinander eine Aufnahmeöffnung für den Lagerbolzen bilden. Auf diese Weise ist eine einwandfreie Drehlagerung für den Lagerbolzen gegeben, der mit minimalem Spiel zwischen der Klinke und dem Lagerblech sitzt.

Besonders vorteilhaft ist es, wenn die U-förmige Öffnung im Lagerblech längs eines Kreisbogens eines Kreises ausgebildet ist, dessen Mittelpunkt die Drehachse der ersten Drehgelenkverbindung ist. Wird nämlich der Sitz um die erste Drehgelenkverbindung gedreht, so kann das Lagerblech sehr leicht mit ihrem zugeordneten Lagerbolzen in Eingriff oder außer Eingriff kommen, ohne daß komplizierte Handhabungen erforderlich sind.

In Weiterbildung der erfindungsgemäßen Halterung ist vorgesehen, daß ein Paar von Klinken und ein Paar von komplementären Lagerbolzen vorgesehen ist und daß das Paar von Klinken mit einer gemeinsamen Betätigungsstange verbunden und synchron betätigbar ist. Die Betätigungsstange bildet dabei zugleich einen Griff, der am Sitz angebracht ist, so daß man den Sitz mit einer Hand tragen kann. Man kann den Sitz dann auch mit einer Hand einsetzen und auch wieder entriegeln und herausnehmen.

Bei der erfindungsgemäßen Halterung erweist es sich als zweckmäßig, wenn der Lagerbolzen an einem Lagerbock ausgebildet ist, der eine Führung für die Klinke aufweist. Damit wird das Montieren des Sitzes am Fahrzeugkörper erleichtert und zugleich eine stabile seitliche Lagerung des Sitzes gewährleistet.

Besonders vorteilhaft ist es, wenn bei der erfindungsgemäßen Halterung die Drehachsen der beiden Drehgelenkverbindungen im wesentlichen parallel zueinander in horizontaler Richtung verlaufen. Damit wird das Montieren und Herausnehmen des Sitzes erleichtert.

In Weiterbildung der erfindungsgemäßen Halterung ist vorgesehen, daß die am Fahrzeugkörper anzubringenden Befestigungsteile der beiden Drehgelenkverbindungen an einer gemeinsamen Basisplatte befestigt sind. Dadurch wird die Montage der Halterung am Fahrzeugkörper erleichtert, denn die Befestigungsteile können dann bereits beim Hersteller entsprechend justiert werden.

Besonders vorteilhaft ist es, daß bei der erfindungsgemäßen Halterung sämtliche Befestigungsteile der Halterung an der Unterseite des Sitzes in einem der Kniekehle eines Benutzers gegenüberliegenden Bereich aufnehmbar sind. Auf diese Weise wird kein zusätzlicher Bauraum benötigt, sondern ein ohnehin zur Verfügung stehender Raum genutzt.

In Weiterbildung der erfindungsgemäßen Halterung ist vorgesehen, daß die Befestigungsteile der ersten Drehgelenkverbindung Zuleitungen für eine Sitzheizung bilden. Wenn dann diese erste lösbare Drehgelenkverbindung gelöst wird, ist die elektrische Versorgung für den Sitz automatisch unterbrochen.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher erläutert. Die Zeichnungen zeigen in
- Fig. 1: eine perspektivische Darstellung der am Fahrzeugkörper angebrachten Befestigungsteile einer Ausführungsform der erfindungsgemäßen Halterung;
- Fig. 2: eine Seitenansicht der Anordnung gemäß Fig. 1;
- Fig. 3: eine perspektivische Darstellung der am Sitz angebrachten Befestigungsteile einer Ausführungsform der erfindungsgemäßen Halterung;
- Fig. 4: eine Seitenansicht der Anordnung gemäß Fig. 3;
- Fig. 5: eine Seitenansicht einer an einem Lagerblech montierten Klinke in der Arretierstellung;
- Fig. 6: eine perspektivische Darstellung der Anordnung gemäß Fig. 5;
- Fig. 7: eine Stirnansicht der Anordnung gemaß Fig. 5 von links;
- Fig. 8: eine perspektivische Darstellung eines Klinkenmechanismus in der Offenstellung;
- Fig. 9: eine Seitenansicht des Klinkenmechanismus gemäß Fig. 8 von links bzw. hinten;
- Fig. 10: eine Seitenansicht des Klinkenmechanismus gemäß Fig. 8 in der Offenstellung;
- Fig. 11: eine der Fig. 8 entsprechende Darstellung des Klinkenmechanismus in der Arretierstellung;
- Fig. 12: eine der Fig. 10 entsprechende Seitenansicht des Klinkenmechanismus in der Arretierstellung;
- Fig. 13: eine Seitenansicht einer ersten Ausführungsform einer an einem Lagerbock montierten Aufnahmelasche;
- Fig. 14: eine perspektivische Darstellung der Anordnung gemäß Fig. 13;
- Fig. 15: eine der Fig. 14 entsprechende perspektivische Darstellung einer zweiten Ausführungsform einer Aufnahmelasche, die an einem Lagerbock montiert ist;
- Fig. 16: eine der Fig. 13 entsprechende Seitenansicht der zweiten Ausführungsform einer Aufnahmelasche, die an einem Lagerbock montiert ist;
- Fig. 17: eine perspektivische Darstellung der Befestigungsteile für die Drehgelenkverbindungen vor der Montage des Sitzes am Fahrzeugkörper;
- Fig. 18: eine perspektivische Darstellung, die die erste Phase der Montage des Sitzes am Fahrzeugkörper zeigt, wobei die erste Drehgelenkverbindung hergestellt ist;
- Fig. 19: eine perspektivische Darstellung zur Erläuterung der zweiten Phase der Montage des Sitzes, wobei die zweite Drehgelenkverbindung hergestellt, aber noch nicht arretiert ist;
- Fig. 20: eine der Fig. 19 ähnliche perspektivische Darstellung, welche die nächste Phase der Montage zeigt, wobei die zweite Drehgelenkverbindung arretiert ist;
- Fig. 21: eine perspektivische Darstellung zur Erläuterung der Montage des Sitzes am Fahrzeugkörper, wobei beide Drehgelenkverbindungen miteinander in Eingriff stehen und der Sitz gerade in seine Ruhestellung auf dem Fahrzeugkörper geklappt wird; und in
- Fig. 22: eine perspektivische Darstellung, die den Sitz in seiner montierten Stellung zeigt, wobei die Halterung an der Unterseite des Sitzes im Eckbereich zwischen der Sitzfläche und der Stirnseite des Sitzes aufgenommen ist.

Die Gesamtsituation der lösbaren Halterung für einen Fahrzeugsitz, insbesondere einen Fahrzeug-Rücksitz, ist am deutlichsten in Fig. 17 dargestellt. Man erkennt einen Sitz 10, der erste Befestigungsteile 30a und 60a aufweist und zur Montage an einem Fahrzeugkörper 20 vorgesehen ist, welcher seinerseits zweite Befestigungsteile 30b und 60b besitzt.

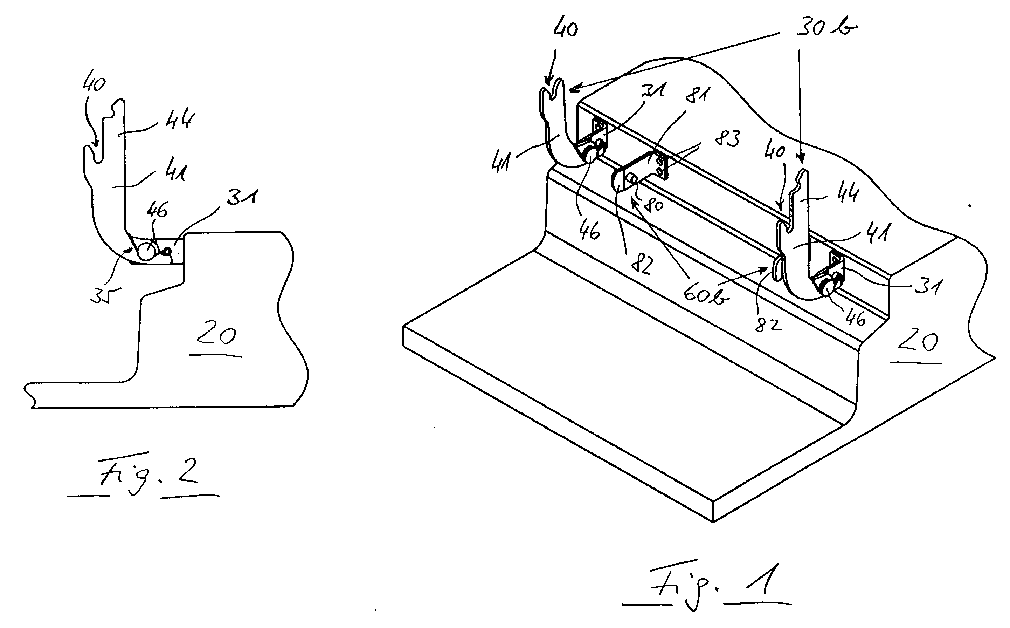

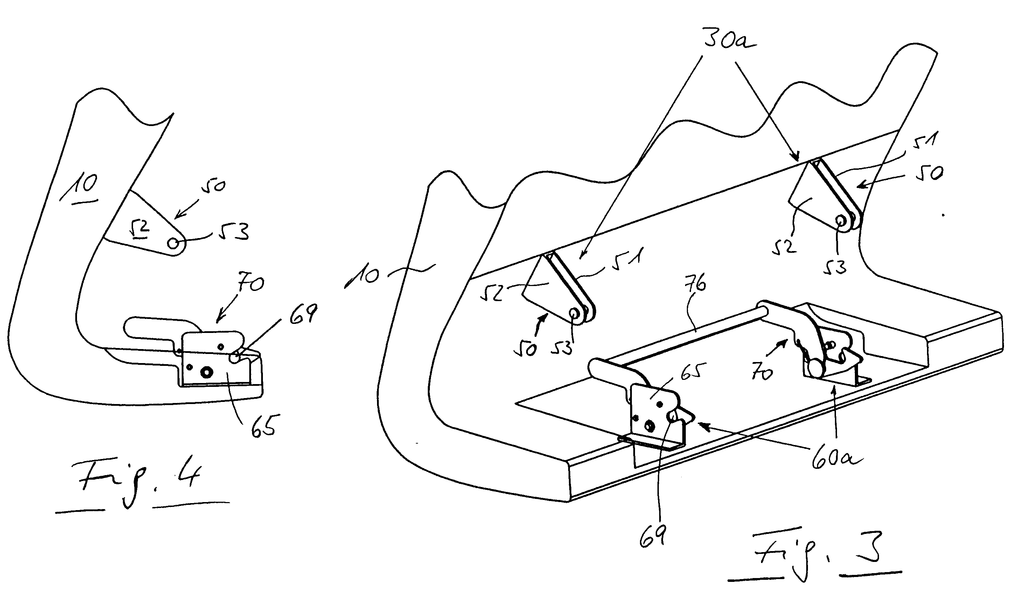

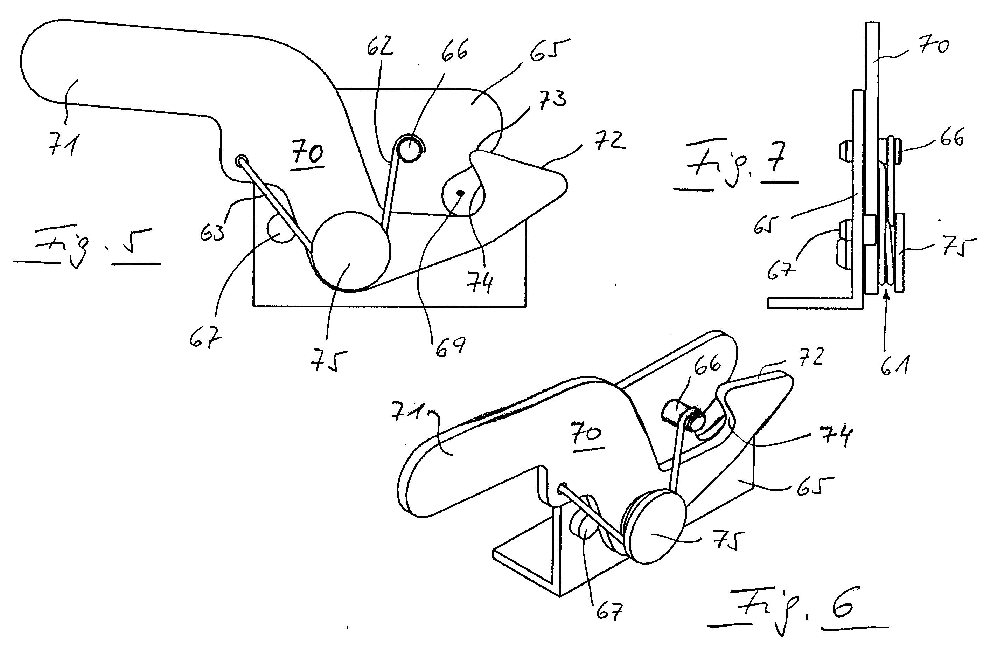

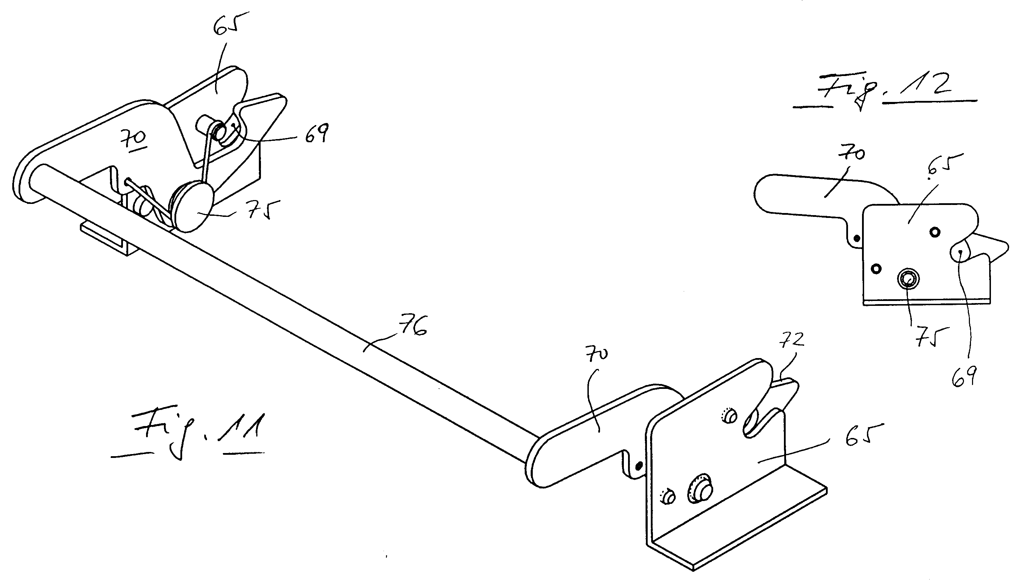

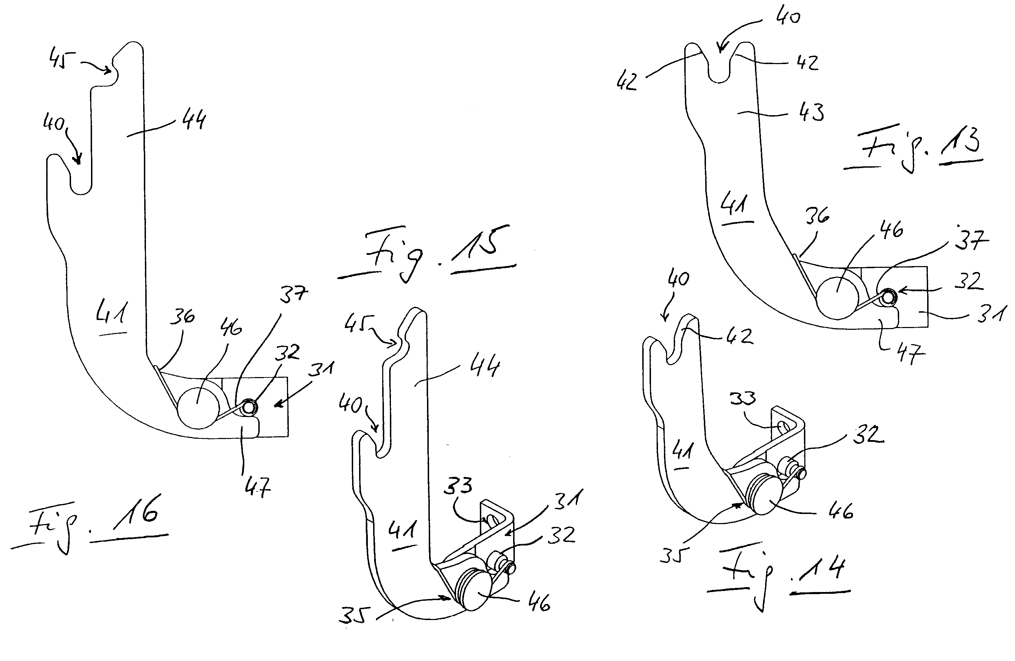

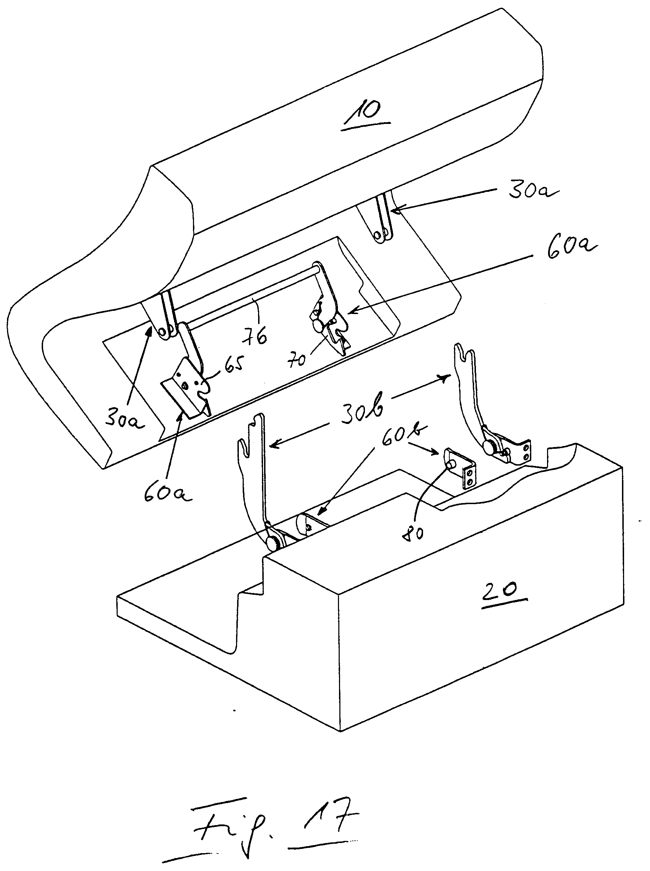

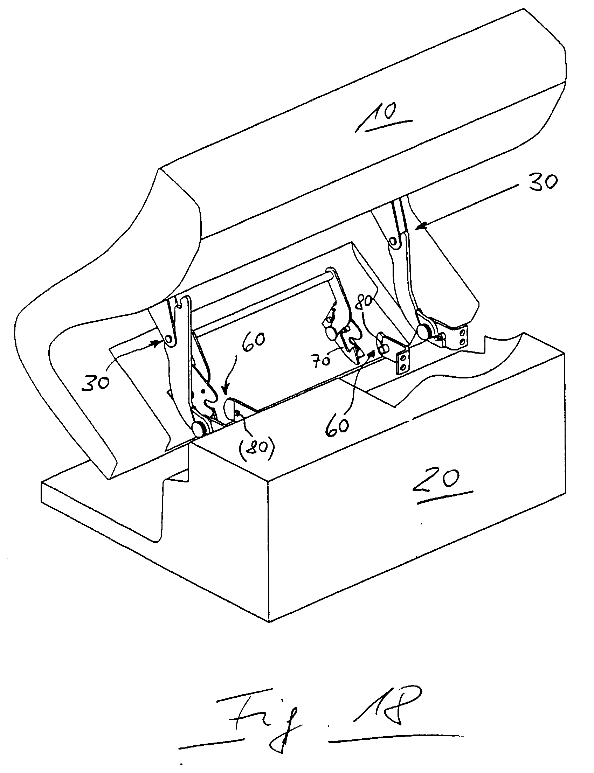

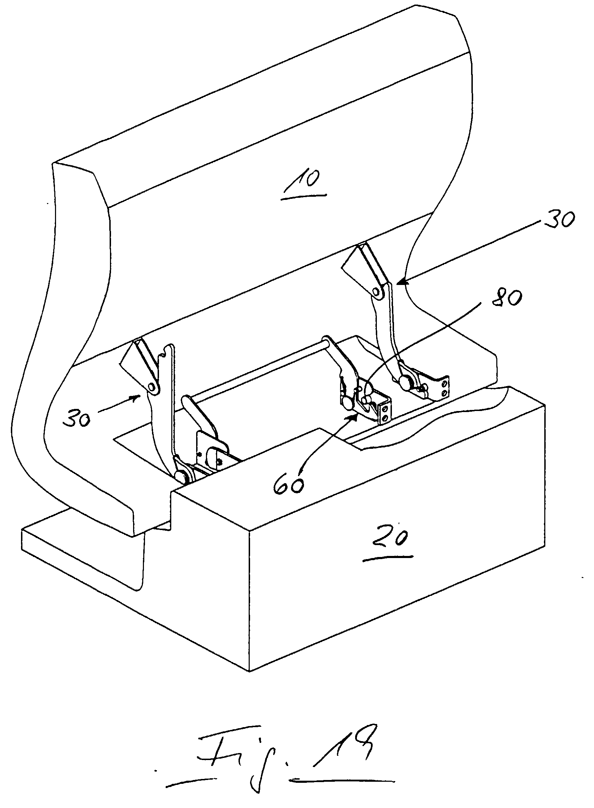

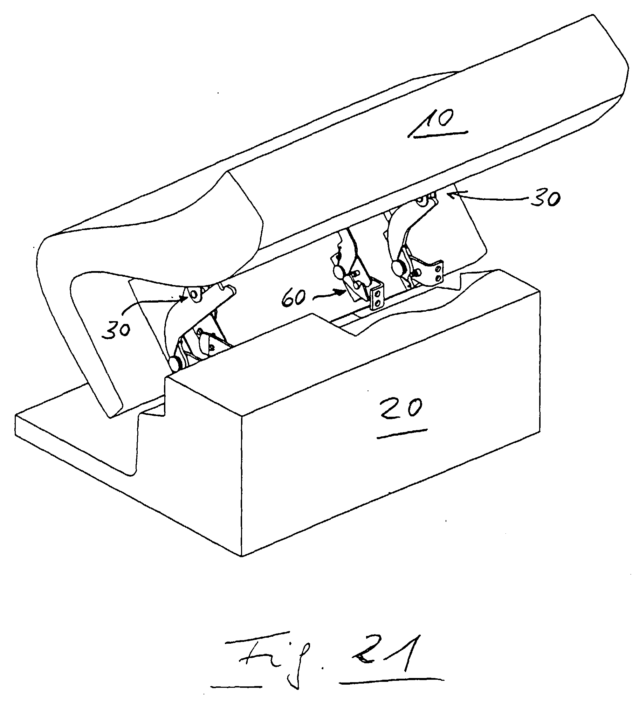

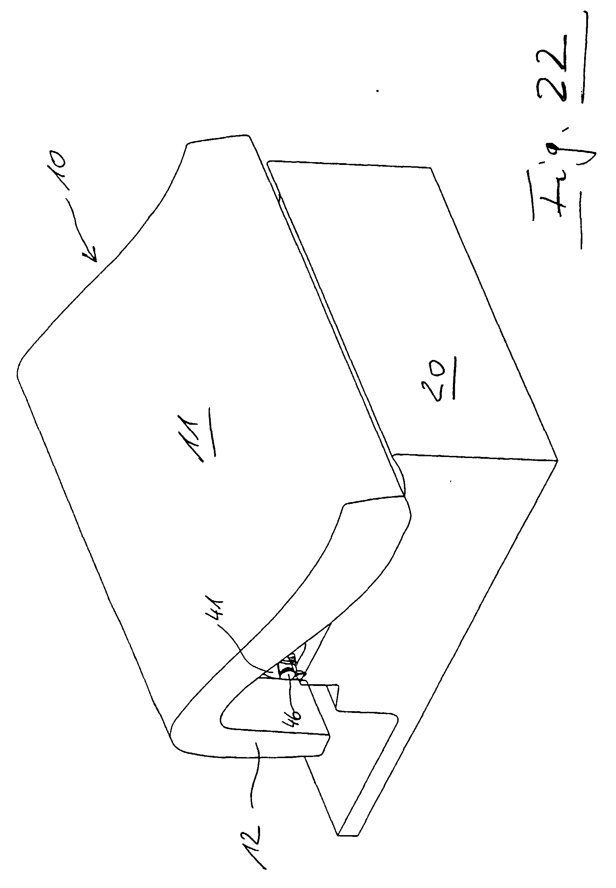

Die ersten Befestigungsteile 30a und 60a, die bei der dargestellten Ausführungsform am Sitz vorgesehen sind, lassen sich in weiteren Einzelheiten den Fig. 3 bis 12 entnehmen, während die zweiten Befestigungsteile 30b und 60b, die bei der dargestellten Ausführungsform am Fahrzeugkörper vorgesehen sind, in weiteren Einzelheiten in den Fig. 1 und 2 sowie in Fig. 13 bis 16 dargestellt sind.

Die Montage des Sitzes 10 am Fahrzeugkörper 20 ist dann in den Fig. 17 bis 22 dargestellt, welche die einzelnen Phasen der Montage zeigen, bei der zunächst die ersten Drehgelenkverbindungen 30 und dann die zweiten Drehgelenkverbindungen 60 hergestellt werden. Beim Ausbauen des Sitzes 10 aus einem Fahrzeug werden dann die Phasen gemäß den Fig. 17 bis 22 in umgekehrter Reihenfolge durchlaufen.

Bei der in Fig. 1 dargestellten Ausführungsform ist ein Paar von Aufnahmelaschen 41 vorgesehen, die mit Bolzen 46 jeweils an einem Lagerbock 31 angelenkt sind. Die Aufnahmelasche 41 weist an ihrer Oberseite eine gabelförmige oder muldenförmige Aufnahme 40 auf, um ein entsprechendes Achsenteil 50 aufzunehmen. Zwischen dem Paar von Aufnahmelaschen 41 ist ein Paar von Lagerbolzen 80 vorgesehen, die an Lagerböcken 81 vorgesehen sind, welche mit nicht dargestellten Schrauben oder Bolzen am Fahrzeugkörper 20 zu befestigen sind. Entsprechende Bohrungen 83 im Lagerbock 81 sowie schräg verlaufende Führungen 82 sind in Fig. 1 schematisch angedeutet.

Die Fig. 13 bis 16 zeigen nähere Einzelheiten der Aufnahmelaschen 41. Man erkennt, daß die Aufnahmelaschen 41 als winkelförmige oder bogenförmige Hebel ausgebildet sind, die mit einem Bolzen 46 als Drehachse an dem Lagerbock 31 montiert sind. An seinem freien Ende weist die Aufnahmelasche 41 eine Verbreiterung 43 auf, die mit schrägen Führungsflächen 42 ausgebildet ist, welche in die muldenförmige Aufnahme 40 übergehen. Die Aufnahmelasche 41 weist an ihrem angelenkten Ende eine Nase 47 auf, die gegen einen Anschlag 32 am Lagerbock 31 anliegt. In dieser Ruhestellung steht die Aufnahmelasche 41 im wesentlichen senkrecht, derart, daß an ihrer Oberseite ein komplementäres Achsenteil 50 leicht in die Aufnahme 40 einsetzbar ist.

Durch geeignete Maßnahmen kann dafür gesorgt werden, daß diese Ruhestellung eine stabile Stellung ist, die nur durch äußere Krafteinwirkung aufgehoben wird. Einmal wird dies erreicht durch die gewichtsmäßige Verteilung des Materials der Aufnahmelasche 41 in Bezug auf die von dem Bolzen 46 gebildete Drehachse. Zum anderen sorgt eine Feder 35 dafür, daß die Aufnahmelasche 41 in diese Ruhestellung vorgespannt ist. Die Feder 35 ist zweckmäßigerweise als gewickelte Schenkelfeder ausgebildet, die bei der dargestellten Ausführungsform um den Bolzen 46 gewickelt ist und mit ihrem einen Schenkel 36 an der Aufnahmelasche 41 angreift, während ihr anderer Schenkel 37 an dem Lagerbock 31 angreift. Insbesondere eignet sich hierfür der ohnehin vorgesehene Anschlag 32 am Lagerbock 31.

Der Lagerbock 31 läßt sich mit geeigneten Befestigungsschrauben oder dergleichen am Fahrzeugkörper 20 montieren. Zu diesem Zweck sind schematisch angedeutete Bohrungen 33 vorgesehen. Die Fig. 15 und 16 zeigen eine spezielle Ausführungsform der Aufnahmelasche 41, wobei am freien Ende der Aufnahmelasche 41 eine Verlängerung 44 vorgesehen ist, die sich neben der Aufnahme 40 nach oben erstreckt und einen Rasthaken 45 am äußeren Ende aufweist. Eine derartige Aufnahmelasche kann dazu dienen, beispielsweise eine Rückenlehne eines Fahrzeugs zu arretieren. Selbstverständlich können an dem Rasthaken 45 auch andere Komponenten im Fahrzeug befestigt werden.

Die Aufnahmelasche 41 befindet sich in den Fig. 13 bis 16 in der Ruhestellung, in der sie im wesentlichen senkrecht nach oben steht, um ein entsprechendes Achsenteil 50 an einem Sitz 10 aufzunehmen. Die Aufnahmelasche 41 kann um den Bolzen 46 als Drehachse im Uhrzeigersinn gedreht werden, und zwar gegen die Kraft der Feder 35. In dieser Richtung kann die Aufnahmelasche eine Drehung um etwa 90° ausführen, bis die rechte Kante der Aufnahmelasche 41 bei der Darstellung gemäß Fig. 13 bis 16 gegen die Oberseite des Anschlages 32 zur Anlage kommt. Auf diese Weise können diese Komponenten bequem an der Unterseite des Sitzes 10 verstaut werden, wenn der Sitz montiert ist.

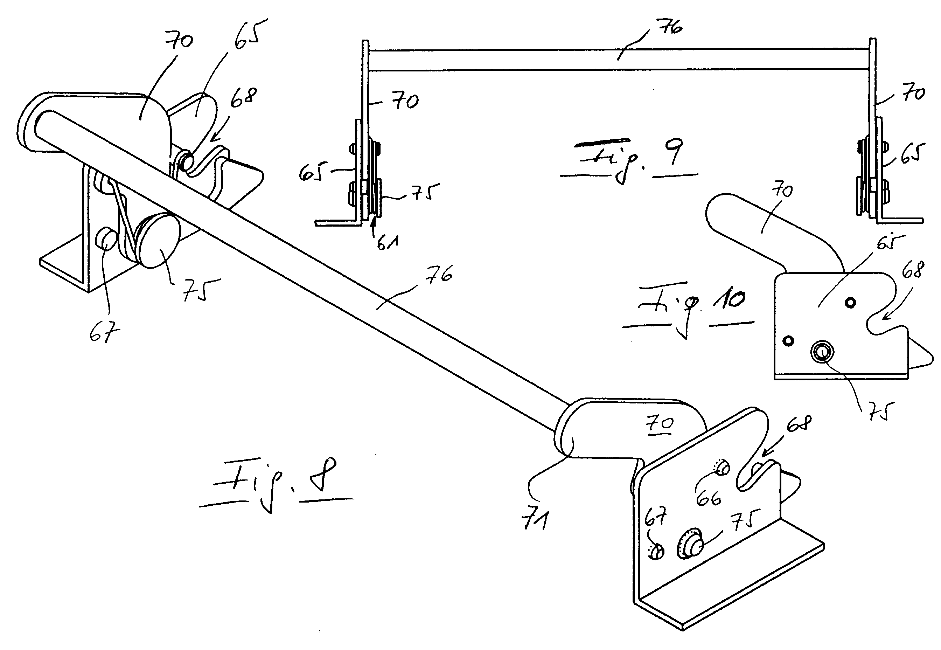

Die ersten Befestigungsteile 30a und 60a sind bei der speziellen Ausführungsform am Sitz 10 angebracht, wie sich den Fig. 3 und 4 entnehmen läßt. Die ersten Befestigungsteile 30a weisen Achsenteile 50 auf, die insbesondere als Einhängebügel ausgebildet sind. Diese Achsenteile 50 haben eine U-förmige Bauform, wobei zwischen den beiden Schenkeln 51 und 52 des U-förmigen Bauteils ein Bolzen 53 als Drehachse eingebaut ist, der zum Eingriff mit der Aufnahme 40 vorgesehen ist. Die beiden Schenkel 51 und 52 nehmen dabei die Aufnahmelasche 41 zwischeinander auf und führen diese, wenn der Sitz 10 um die Drehachse der zweiten Drehgelenkverbindung 60 in seine horizontale Stellung gedreht wird.

Die ersten Befestigungsteile 60a am Sitz 10 sind in näheren Einzelheiten in den Fig. 5 bis 12 dargestellt. Wie aus Fig. 5 ersichtlich, ist eine Klinke 70 mit winkelförmiger Gestalt vorgesehen, die mit einem Bolzen 75 an einem Lagerblech 65 drehbar montiert ist. Dabei begrenzen Anschläge 66 und 67 an dem Lagerblech 65 die Drehbewegung der Klinke 70 um den Bolzen 75 als Drehachse.

Die Lagerbleche 65 sowie die Achsenteile 50 sind mit nicht näher dargestellten üblichen Befestigungsteilen am Sitz 10 befestigt. Die als Einhängebügel 50 ausgebildeten Achsenteile 50 können dabei einzeln oder mit einem gemeinsamen Träger an dem Sitz 10 befestigt sein. Die Lagerbleche 65 können ebenfalls einzeln oder mit einem gemeinsamen Träger am Sitz 10 befestigt sein.

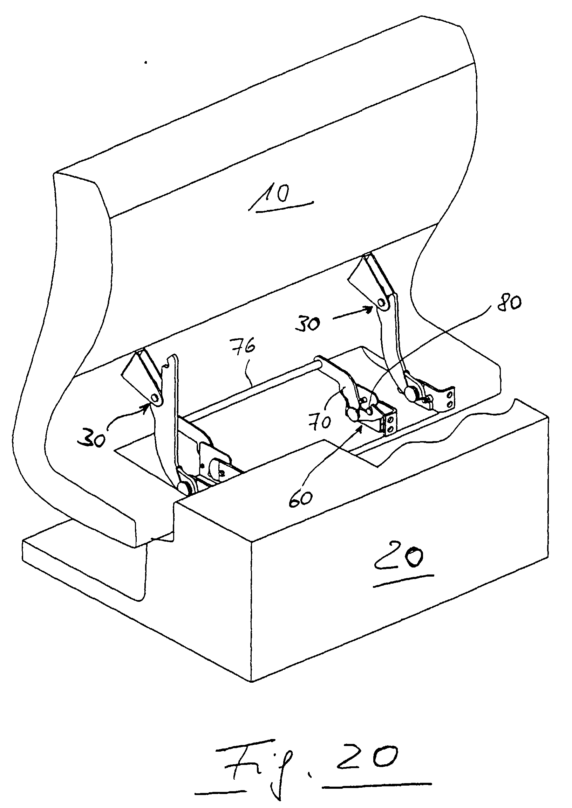

Wie am deutlichsten in Fig. 8 und 10 dargestellt, hat das Lagerblech 65 an seiner Stirnseite eine U-förmige Öffnung, die zur Aufnahme des Lagerbolzens 80 vorgesehen ist. Insbesondere ist die U-förmige Öffnung 68 im Lagerblech 65 längs eines Kreisbogens eines Kreises ausgebildet, dessen Mittelpunkt die Drehachse der ersten Drehgelenkverbindung 30, also die Drehachse des Bolzens 53 ist. Der Grund hierfür wird später erläutert.

Wie in Fig. 5 und 6 am deutlichsten dargestellt, ist die drehbare Klinke 70 winkelförmig ausgebildet und weist an ihrem dem Lagerbolzen 80 zugewendeten Ende einen Arretierhaken auf, der an seiner Vorderseite eine schräg verlaufende Rampe 72 als Gleitfläche für den Lagerbolzen 80 aufweist. Die Rampe 72 geht dann über einen Vorsprung 73 in eine bogenförmige Aussparung 74 an der Rückseite des Vorsprunges über, welche einen Widerhaken für den Lagerbolzen 80 bildet, wenn er sich an dieser Rückseite des Arretierhakens befindet.

Wenn die Klinke 70 mit ihrer Rampe 72 mit dem Lagerbolzen 80 in Eingriff kommt, so gleitet der Lagerbolzen 80 an dieser Rampe 72 entlang, wobei die Klinke 70 bei der Darstellung in Fig. 5 im Uhrzeigersinn nach unten weggedrückt wird und dabei den Zugang in die U-förmige Öffnung 68 in dem Lagerblech 65 freigibt. Wenn der Lagerbolzen 80 dann den Vorsprung 73 passiert hat, dreht sich die Klinke 70 im Gegenuhrzeigersinn, also bei der Darstellung gemäß Fig. 5 nach oben, mit der Folge, daß der Lagerbolzen 80 dann in der Lageröffnung 69 gefangen ist, die von der Aussparung 74 in der Klinke und dem Boden der U-förmigen Öffnung 68 gebildet ist. Diese Situation ist in Fig. 5 und 12 besonders deutlich dargestellt.

Die Rückstellung der Klinke 70 in ihre Arretierstellung wird einerseits erreicht durch die gewichtsmäßige Verteilung des Materials der Klinke 70 bezogen auf den Bolzen 75 als Drehpunkt. Ferner ist die Klinke 70 mit einer Feder 61 in die Arretierstellung vorgespannt. Die Feder 61 ist zweckmäßigerweise eine gewickelte Schenkelfeder, die mit dem einen Schenkel 63 an der Klinke angreift, während der andere Schenkel 62 an dem Lagerblech 65 angreift. Insbesondere eignet sich hierfür der ohnehin vorhandene Anschlag 66. Die Feder 61 ist zweckmäßigerweise um den Bolzen 75 als Achse gewickelt.

Die Fig. 8 und 11 zeigen eine spezielle Ausführungsform der Klinken, wobei jeweils ein Paar von Klinken 70 mit einer gemeinsamen Betätigungsstange fest verbunden ist und daher gemeinsam und synchron betätigt werden kann. Die Betätigungsstange 76 ist dabei an den hinteren Enden 71 der Klinken 70 befestigt. Fig. 11 zeigt dabei die Arretierstellung der Klinken 70, wobei die Betätigungsstange 76 eine untere Stellung einnimmt. Wird diese Betätigungsstange 76 nach oben gezogen, so drehen sich die Klinken 70 synchron um die Bolzen 75, mit der Folge, daß die U-förmigen Öffnungen 68 der Lagerbleche 65 geöffnet werden, um die in der Lageröffnung 69 befindlichen Lagerbolzen 80 freizugeben. Läßt man die Betätigungsstange 76 los, so kehrt sie in die Arretierstellung gemäß Fig. 11 zurück.

Obwohl nicht näher dargestellt, können die Befestigungsteile 30a und 30b, die am Fahrzeugkörper 20 bzw. am Sitz 10 vorgesehen sind, elektrische Zuleitungen für eine Sitzheizung im Sitz 10 bilden. Wenn der Sitz 10 herausgenommen wird, ist die Stromversorgung automatisch unterbrochen.

Die Montage des Sitzes 10 am Fahrzeugkörper 20 wird nachstehend unter Bezugnahme auf die Fig. 17 bis 22 näher erläutert. Für das Herausnehmen des Sitzes 10 sind die dargestellten Phasen dann in der umgekehrten Reihenfolge zu durchlaufen.

Fig. 17 zeigt den Sitz 10 mit seinen ersten Befestigungsteilen 30a und 60a in einer Stellung unmittelbar vor seiner Montage am Fahrzeugkörper 20. Man kann in dieser Situation den gesamten Sitz 10 an der Betätigungsstange 76 halten.

Wie in Fig. 18 dargestellt, werden zunächst einmal die Achsenteile 50 in die entsprechenden Aufnahmen 40 eingesetzt, so daß die ersten Drehgelenkverbindungen 30 hergestellt werden. In der nächsten Phase braucht man dann den Sitz 10 nur um die Drehachse der ersten Drehgelenkverbindung 30 zu drehen, damit auch die zweite Drehgelenkverbindung 60 hergestellt wird. Fig. 18 zeigt dabei die Klinken 70 kurz vor ihrem Eingriff mit den entsprechenden Lagerbolzen 80. Zu diesem Zweck sind die Lageröffnungen 69 durch das Hochziehen der Betätigungsstange 76 geöffnet.

Selbst wenn aber die Betätigungsstange 76 nicht hochgezogen ist, können die zweiten Drehgelenkverbindungen 60 ohne weiteres hergestellt werden, indem man den Sitz 10 um die Drehachse der ersten Drehgelenkverbindung 30 dreht. Wie oben erläutert, weicht die Klinke 70 durch Drehung um die Drehachse der Bolzen 75 aus, so daß der Lagerbolzen 80 seine Position in der Lageröffnung 69 einnehmen kann.

Fig. 19 zeigt die nächste Phase, in der die Lageröffnung 69 bereits mit dem Lagerbolzen 80 in Eingriff steht. Um das Verständnis zu erleichtern, ist die Klinke 70 allerdings noch nicht in ihre Arretierstellung zurückgedreht.

Die Fig. 20 zeigt dann die nächste Phase, in der beide Drehgelenkverbindungen 30 und 60 hergestellt sind und zudem die Klinke 70 ihre Arretierstellung eingenommen hat, in der sie den Lagerbolzen 80 festhält. Auf diese Weise ist der Sitz 10 sicher am Fahrzeugkörper befestigt und verriegelt. Er kann nur gelöst und wieder herausgenommen werden, wenn durch Betätigung der Klinken 70 die Arretierstellung aufgehoben wird.

Fig. 21 zeigt die nächste Phase, in der der Sitz 10 in seine horizontale Lagerstellung gedreht wird. Dabei wirken die Lagerbolzen 80 als Drehachse für den Sitz, der sich mit seinem Lagerblech 65 und der Klinke 70 um die Lagerbolzen 80 dreht. Die Aufnahmelaschen 41 werden dabei aus ihrer senkrechten Stellung in eine horizontale Stellung gedreht.

Die Fig. 22 zeigt schließlich die Endphase, in der der Sitz 10 seine Lagerstellung eingenommen hat. Die Sitzfläche 11 weist nun in üblicher Weise nach oben. Zwischen der Sitzfläche 11 und der Stirnseite 12 des Sitzes ist die gesamte Halterung aufgenommen. Dieser Bereich ist üblicherweise winkelförmig ausgebildet und an die Kniekehle eines Benutzers angepaßt.

Zum Herausnehmen des Sitzes werden die Phasen gemäß Fig. 17 bis 22 in umgekehrter Reihenfolge durchlaufen. Wenn der Sitz in eine senkrechte Stellung gemäß Fig. 20 gedreht worden ist, braucht man lediglich die Betätigungsstange 76 hochzuziehen, so daß die Verriegelung gelöst wird. Wenn man diese Betätigungsstange 76 weiter nach oben zieht, so löst sich der gesamte Sitz aufgrund der Formgebung der Befestigungsteile allein aus den Befestigungsteilen, die am Fahrzeugkörper 20 montiert sind, so daß man ihn leicht entfernen kann, um den gewünschten Raum im Fahrzeug zu schaffen.

Wenn vorstehend anhand der Zeichnungen eine Ausführungsform beschrieben ist, bei der jeweils ein Paar von ersten Drehgelenkverbindungen 30 und zweiten Drehgelenkverbindungen 60 vorgesehen ist, die im wesentlichen symmetrisch zu einer vertikalen Mittelebene des Sitzes 10 in Längsrichtung angeordnet sind, so handelt es sich dabei um eine besonders robuste Konstruktion, bei der die auf den Sitz 10 wirkenden Kräfte gleichmäßig aufgenommen werden. Die Erfindung ist jedoch nicht auf eine derartige Ausführungsform beschränkt.

So ist es beispielsweise möglich, bei einer ersten Alternative jeweils nur eine erste lösbare Drehgelenkverbindung 30 sowie eine zweite lösbare Drehgelenkverbindung 60 der vorstehend beschriebenen Art zu verwenden. In diesem Falle wird man zweckmäßigerweise den Lagerbolzen 80 zwischen einem Paar von Lagerböcken 81 anordnen, die dann zugleich seitliche Führungen für das Lagerblech 65 und die Klinke 70 bilden. Das hintere Ende 71 der Klinke 70 bildet dann das Betätigungsteil für die Klinke 70 selbst. Falls gewünscht, kann an diesem hinteren Ende 71 der Klinke 70 eine Stange seitlich vorstehen, um die Handhabung der Halterung zum Entriegeln der Klinke 70 zu vereinfachen.

Wenn lediglich eine erste Drehgelenkverbindung 30 und eine zweite Drehgelenkverbindung 60 vorgesehen sind, so wird man diese zweckmäßigerweise etwa im Bereich der Mittelebene des Sitzes 10 anordnen, um einerseits die Montage zu erleichtern und andererseits ein gleichmäßiges Aufnehmen der auf den Sitz wirkenden Kräfte sicherzustellen. Falls gewünscht, können dann am Sitz 10 nicht dargestellte Vorsprünge vorgesehen sein, die mit komplementären Aussparungen am Fahrzeugkörper 20 in Eingriff kommen, um den Sitz 10 in seiner horizontalen Stellung exakt zu positionieren. Alternativ können die Ausnehmungen im Fahrzeugsitz 10 vorgesehen sein und mit Vorsprüngen am Fahrzeugkörper 20 in Eingriff kommen.

Bei einer abgewandelten Ausführungsform gemäß einer zweiten Alternative sind zwei symmetrisch zueinander angeordnete erste Drehgelenkverbindungen 30, aber nur eine zweite Drehgelenkverbindung 60 vorgesehen. Die ersten Drehgelenkverbindungen 30 sind dann in der Weise ausgebildet, wie es vorstehend im einzelnen anhand der Zeichnungen beschrieben ist. Die zweite Drehgelenkverbindung 60 kann dann so ausgebildet sein, wie es vorstehend anhand der Alternative erläutert worden ist. Die zweite, arretierbare und lösbare Drehgelenkverbindung 60 ist dann zweckmäßigerweise im Bereich der Mittelebene des Sitzes 10 angeordnet, während die beiden ersten Drehgelenkverbindungen 30 symmetrisch dazu vorgesehen sind. Man erhält auf diese Weise eine stabile Dreipunktlagerung der Halterung.

Bei einer weiteren abgewandelten Ausführungsform einer dritten Alternative gemäß der Erfindung sind nur eine erste Drehgelenkverbindung 30, aber ein Paar von zweiten lösbaren und arretierbaren Drehgelenkverbindungen 60 vorgesehen. Die zweiten Drehgelenkverbindungen 60 sind dann in der Weise ausgebildet, wie es vorstehend im einzelnen anhand der Figuren der Zeichnungen erläutert ist, während die erste Drehgelenkverbindung 30 zweckmäßigerweise im Bereich der Mittelebene des Sitzes 10 in Längsrichtung angeordnet ist und sich zwischen den beiden Lagerböcken 81 mit den Lagerbolzen 80 befindet.

Auch in diesem Falle wird eine stabile Dreipunktlagerung der Halterung erreicht.

Zur Montage der Befestigungsteile 30a, 30b, 60a und 60b ist bei sämtlichen Ausführungsformen darauf zu achten, daß - bezogen auf die Längserstreckung des Sitzes 10 bzw. des Fahrzeugkörpers 20 - der Abstand zwischen der jeweiligen Achse des Lagerbolzens 80 und der Aufnahme 40 den gleichen Wert hat wie der Abstand zwischen der jeweiligen Achse des Bolzens 53 und der Aufnahmeöffnung 69 im Klinkenmechanismus. Dann sind die Montage und die Demontage des Sitzes 10 in einfacher Weise möglich, ohne daß ein unerwünschtes Spiel zwischen den Befestigungsteilen auftritt.

## Patentansprüche

1. Halterung für einen Fahrzeugsitz, insbesondere einen Fahrzeug-Rücksitz, bei der erste Befestigungsteile (30a, 60a), die an der Unterseite des Sitzes (10) angebracht sind, mit zweiten Befestigungsteilen (30b, 60b) am Fahrzeugkörper (20) in Eingriff bringbar sind, um den Sitz (10) am Fahrzeugkörper (20) zu befestigen,
dadurch gekennzeichnet,
daß die ersten Befestigungsteile (30a, 60a) und die zweiten Befestigungsteile (30b, 60b) mindestens eine erste lösbare Drehgelenkverbindung (30) und eine in Längsrichtung des Sitzes (10) davon beabstandete, zweite lösbare Drehgelenkverbindung (60) bilden
und daß die zweite lösbare Drehgelenkverbindung (60) arretierbar ist.

2. Halterung nach Anspruch 1,
dadurch gekennzeichnet,
daß ein Paar von ersten und/oder zweiten Drehgelenkverbindungen (30, 60) vorgesehen ist, wobei die Drehgelenkverbindungen (30,60), auf die Längsrichtung des Sitzes (10) bezogen, symmetrisch zueinander angeordnet sind.

3. Halterung nach Anspruch 1 oder 2,
dadurch gekennzeichnet,
daß die erste Drehgelenkverbindung (30) eine gabelförmige oder muldenförmige Aufnahme (40) aufweist, die ein Achsenteil (50) drehbar aufnimmt, wobei jeweils die eine Komponente von Aufnahme (40) und Achsenteil (50) an dem Sitz (10) und die andere an dem Fahrzeugkörper (20) anbringbar ist.

4. Halterung nach Anspruch 3,
dadurch gekennzeichnet,
daß die erste Drehgelenkverbindung (30) eine Aufnahmelasche (41) aufweist, die um eine im wesentlichen horizontale Achse (46) drehbar am Fahrzeugkörper (20) angelenkt ist und die an ihrem freien Ende (43) die gabelförmige oder muldenförmige Aufnahme (40) bildet.

5. Halterung nach Anspruch 4,
dadurch gekennzeichnet,
daß die Aufnahmelasche (41) als bogenförmiger oder winkelförmiger Hebel ausgebildet und mit einem Bolzen (46) drehbar an einem Lagerbock (31) an dem Fahrzeugkörper (20) befestigbar ist.

6. Halterung nach Anspruch 4 oder 5,
dadurch gekennzeichnet,
daß die Aufnahmelasche (41) mit einer Feder (35) in eine im wesentlichen senkrechte Ruhestellung vorgespannt ist, in der die Aufnahme (40) nach oben weist.

7. Halterung nach Anspruch 6,
dadurch gekennzeichnet,
daß die Feder (35) eine gewickelte Schenkelfeder ist, die mit dem einen Schenkel (36) an der Aufnahmelasche (41) und mit dem anderen Schenkel (37) an dem Lagerbock (31) angreift.

8. Halterung nach einem der Ansprüche 4 bis 7,
dadurch gekennzeichnet,
daß die Drehbewegung der Aufnahmelasche (41) durch einen Anschlag (32) begrenzt ist, derart, daß die Aufnahmelasche (41) in der Anschlagstellung (Ruhestellung) im wesentlichen senkrecht steht.

9. Halterung anch einem der Ansprüche 4 bis 7,
dadurch gekennzeichnet,
daß die Aufnahmelasche (41) an ihrem oberen Ende eine Verlängerung (44) aufweist, die in der Ruhestellung der Aufnahmelasche (41) neben der Aufnahme (40) nach oben vorsteht und einen Rasthaken (45) zur Arretierung einer Fahrzeugkomponente bildet.

10. Halterung nach einem der Ansprüche 3 bis 9,
dadurch gekennzeichnet,
daß das Achsenteil (50) als Einhängebügel ausgebildet ist, der U-förmig ausgebildet ist und zwischen den beiden Schenkeln (51, 52) des U einen Bolzen (53) als Drehachse zum Eingriff mit der Aufnahme (40) aufweist.

11. Halterung nach einem der Ansprüche 1 bis 10,
dadurch gekennzeichnet,
daß die zweite Drehgelenkverbindung (60) zwei Laschen mit komplementären Bohrungen aufweist, die durch einen arretierbaren Bolzen als Drehachse lösbar miteinander verbunden sind.

12. Halterung nach einem der Ansprüche 1 bis 10,
dadurch gekennzeichnet,
daß die zweite Drehgelenkverbindung (60) einen Lagerbolzen (80) und eine arretierbare Klinke (70) zum Eingriff mit dem Lagerbolzen (80) aufweist, wobei jeweils die eine Komponente von Lagerbolzen (80) und Klinke (70) an dem Sitz (10) und die andere an dem Fahrzeugkörper (20) anbringbar sind.

13. Halterung nach Anspruch 12,
dadurch gekennzeichnet,
daß die Klinke (70) mit einem Bolzen (75) an einem Lagerblech (65) drehbar gelagert und zwischen einer Offenstellung und einer Arretierstellung schwenkbar ist.

14. Halterung nach Anspruch 12 oder 13,
dadurch gekennzeichnet,
daß die Klinke (70) drehbar gelagert und mit einer Feder (61) in ihre Arretierstellung vorgespannt ist.

15. Halterung nach einem der Ansprüche 12 bis 14,
dadurch gekennzeichnet,
daß das Lagerblech (65) eine U-förmige Öffnung (68) an seiner Stirnseite zur Aufnahme des Lagerbolzens (80) sowie Anschläge (66, 67) aufweist, die die Drehbewegung der Klinke (70) an dem Lagerblech (65) in die Offenstellung bzw. in die Arretierstellung begrenzen.

16. Halterung nach Anspruch 14 oder 15,
dadurch gekennzeichnet,
daß die Feder (61) eine gewickelte Schenkelfeder ist, die mit dem einen Schenkel (63) an der Klinke (70) und mit dem anderen Schenkel (62) an dem Lagerblech (65) angreift.

17. Halterung nach einem der Ansprüche 12 bis 16,
dadurch gekennzeichnet,
daß die Klinke (70) an ihrem dem Lagerbolzen (80) zugewendeten Ende einen Arretierhaken aufweist, der an seiner Vorderseite eine Rampe (72) als Gleitfläche für den Lagerbolzen (80) aufweist, wobei die Rampe (72) über einen Vorsprung (73) in eine Aussparung (74) an der Rückseite übergeht, welche einen Widerhaken für den Lagerbolzen (80) bildet.

18. Halterung nach Anspruch 17,
dadurch gekennzeichnet,
daß die Aussparung (74) in der Klinke (70) und die U-förmige Öffnung (68) im Lagerblech (65) miteinander ausgefluchtet sind und zwischeneinander eine Aufnahmeöffnung (69) für den Lagerbolzen (80) bilden.

19. Halterung nach einem der Ansprüche 15 bis 18,
dadurch gekennzeichnet,
daß die U-förmige Öffnung (68) im Lagerblech (65) längs eines Kreisbogens eines Kreises ausgebildet ist, dessen Mittelpunkt die Drehachse der ersten Drehgelenkverbindung (30) ist.

20. Halterung nach einem der Ansprüche 12 bis 19,
dadurch gekennzeichnet,
daß ein Paar von Klinken (70) und ein Paar von komplementären Lagerbolzen (80) vorgesehen ist und daß das Paar von Klinken (70) mit einer gemeinsamen Betätigungsstange (76) verbunden und synchron betätigbar ist.

21. Halterung nach einem der Ansprüche 12 bis 20,
dadurch gekennzeichnet,
daß der Lagerbolzen (80) an einem Lagerbock (81) ausgebildet ist, der eine Führung (82) für die Klinke (70) aufweist.

22. Halterung nach einem der Ansprüche 1 bis 21,
dadurch gekennzeichnet,
daß die Drehachsen der beiden Drehgelenkverbindungen (30, 60) im wesentlichen parallel zueinander in horizontaler Richtung verlaufen.

23. Halterung nach einem der Ansprüche 1 bis 22,
dadurch gekennzeichnet,
daß die am Fahrzeugkörper (20) anzubringenden Befestigungsteile der beiden Drehgelenkverbindungen (30, 60) an einer gemeinsamen Basisplatte befestigt sind.

24. Halterung nach einem der Ansprüche 1 bis 23,
dadurch gekennzeichnet,
daß sämtliche Befestigungsteile (30a, 30b, 60a, 60b) der Halterung an der Unterseite des Sitzes (10) in einem der Kniekehle eines Benutzers gegenüberliegenden Bereich aufnehmbar sind.

25. Halterung nach einem der Ansprüche 1 bis 24,
dadurch gekennzeichnet,
daß die Befestigungsteile (30a, 30b) der ersten Drehgelenkverbindung (30) Zuleitungen für eine Sitzheizung bilden.
